# NEUE EUROPÄISCHE PATENTSCHRIFT

(11) **EP 1 420 033 B2**
(45) Veröffentlichungstag und Bekanntmachung des Hinweises auf die Entscheidung über den Einspruch: **25.02.2009**
(45) Hinweis auf die Patenterteilung: 25.08.2004
(21) Anmeldenummer: 03025498.1
(22) Anmeldetag: 06.11.2003
(51) Int. Cl.: C08F 2/24

(54) **Verfahren zur Herstellung von schutzkolloidstabilisierten Polymerisaten in Form deren in Wasser redispergierbaren Pulver**
Process for the preparation of protective-colloid-stabilized polymers in the form of their water-redispersible powders
Procédé pour la préparation de polymères stabilisés par un colloide protecteur sous forme de poudre redispersable dans l'eau

(30) Priorität: 14.11.2002 DE 10253046
(43) Veröffentlichungstag der Anmeldung: 19.05.2004
(73) Patentinhaber: Wacker Chemie AG, 81737 München (DE)
(72) Erfinder: Weitzel, Hans-Peter, Dr., 84571 Reischach (DE); Stark, Kurt, Dr., 84508 Burgkirchen (DE)
(74) Vertreter: Schuderer, Michael

(56) Entgegenhaltungen:
- EP-A- 1 088 835
- DE-A- 19 928 933

## Beschreibung

Die Erfindung betrifft Verfahren zur Herstellung von schutzkolloidstabilisierten Polymerisaten in Form deren in Wasser redispergierbaren Pulver, und die Verwendung dieser Polymerisate.

Schutzkolloid-stabilisierte Polymerisate werden vor allem in Form deren wässriger Dispersionen oder in Wasser redispergierbarer Polymerpulver in vielerlei Anwendungen, beispielsweise als Beschichtungsmittel oder Klebemittel für die unterschiedlichsten Substrate, wie als zementäre Fliesenkleber, eingesetzt. Als Schutzkolloide werden in der Regel Polyvinylalkohole eingesetzt. Der Einsatz von Polyvinylalkohol ist erstrebenswert, weil dieser im Vergleich zu Systemen, die durch niedermolekulare Verbindungen (Emulgatoren) stabilisiert sind, selbst zur Festigkeit, beispielsweise Haftzugswerten im Fliesenkleber, beiträgt. Als Monomere zur Herstellung von redispergierbaren Pulvern werden bisher bevorzugt Vinylester und Ethylen eingesetzt, da die Stabilisierung von Acrylatcopolymeren bzw. Styrolacrylatcopolymeren oder Styrol-Butadiencopolymeren durch Polyvinylalkohol nicht so einfach zu bewerkstelligen ist.

Ein Nachteil bei der Verwendung von Polyvinylalkohol ist die mit diesem Schutzkolloid einhergehende Wasseranfälligkeit der zugehörigen Produkte. Probleme können nicht nur bei der Herstellung, sondern auch bei der Anwendung der gewünschten Produkte auftreten. Insbesondere bei der Anwendung von Polymerisaten in Form deren Redispersionspulver zur Verbesserung der Mörteleigenschaften, einem Haupteinsatzgebiet von Redispersionspulvern, müssen die Rezepturen über eine gewisse Zeit stabil bleiben und dürfen ihre Verarbeitungskonsistenz nicht wesentlich verändern (Viskositäts- bzw. Zementstabilität); denn es ist einem Anwender nicht zuzumuten, daß er innerhalb einer kurzen Zeitspanne eine neue Mischung anrühren muß. In der Betonund Mörtelindustrie spielen darüberhinaus die mechanischen Eigenschaften, wie die Druckfestigkeit, die Porosität und damit der Luftporengehalt eine wesentliche Rolle. Sind zu viele Luftporen vorhanden, so sinkt die Druckfestigkeit stark ab, sind zu wenig oder keine Luftporen im Mörtel oder Beton vorhanden, ist der Baustoff nicht genügend frost-taustabil. Die mit dem Dispersionspulver vergüteten hydraulisch abbindenden Systeme sollen zudem noch bessere Haftung gegenüber den unvergüteten Systemen erbringen.

Polyvinylalkoholstabilisierte Pulver zeigen zwar schon gutes Viskositäts- und Verarbeitungsverhalten in zementären Anwendungen, dennoch ist es in vielen Fällen erwünscht dieses Verhalten nochmals zu verbessern. Polyvinylalkoholstabilisierte Pulver und Dispersionen sind in der Literatur vielfach erwähnt, beispielsweise in der EP-A 1065224, EP-A 1110978, EP-A 1110979. Um die Wasseranfälligkeit der erhaltenen Produkte einerseits und die Stabilität der Dispersionen andererseits zu verbessern wurde zum Beispiel in der WO-A 99/16794 beschrieben, mit Veova 10 hydrophob modifizierte Polyvinylalkohole einzusetzen. Diese Polyvinylalkohole stabilisieren zwar hervorragend, zeigen aber nur geringen Einfluss auf die Wasseranfälligkeit der damit hergestellten Produkte, da der Modifizierungsgrad auf Grund der Wasserlöslichkeit nur gering ist.

Weitere Versuche zur Verbesserung der genannten Eigenschaften beruhten zum Beispiel auf wasserlöslichen Polyvinylacetalen. Diese werden durch Umsetzung von Polyvinylalkohol mit Aldehyden erhalten. Problematisch an diesen Polymeren ist die Tatsache, dass sie teilweise sehr niedrige Trübungspunkte aufweisen und somit für die Polymerisation nicht oder nur eingeschränkt verwendbar sind. Die hydrophobierenden Eigenschaften dieser Polymerisate ist gut, aber die stabilisierende Wirkung nur moderat. Polyvinylacetal-Schutzkolloide sind in der EP-A 834520 beschrieben.

Die Verwendung von wasserlöslichen ethylenhaltigen Polyvinylalkoholen als Schutzkolloid in der Polymerisation wird in der EP-A 1088835 beschrieben. Die dort verwendeten vollverseiften Produkte führen zu Bindemitteln mit guten Klebeigenschaften bei Holzverklebungen insbesondere verbesserter Wasserfestigkeit der Verklebung. Diese Produkte eignen sich allerdings nicht zur Herstellung von Dispersionspulver, da die Wasseranfälligkeit so weit reduziert ist, dass ein entsprechendes Pulver nicht mehr redispergiert.

Der Erfindung lag somit die Aufgabe zugrunde, in Wasser redispergierbare Dispersionspulver auf Basis von Monomeren aus der Gruppe der Vinylester, Vinylchlorid, Ethylen, Styrol, (Meth)acrylsäureester und gegebenenfalls weitere Monomere zur Verfügung zu stellen, die beim Einsatz in zementären Anwendungen eine verbesserte Viskositäts- bzw. Zementstabilität besitzen, das Zementabbinden nicht behindern und eine geringere Wasseranfälligkeit der damit hergestellten Produkte hervorrufen.

Gegenstand der Erfindung sind Verfahren zur Herstellung von schutzkolloidstabilisierten Polymerisaten in Form deren in Wasser redispergierbaren Pulver auf der Basis von Homo- oder Mischpolymerisaten von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide mittels Emulsionspolymerisation oder Suspensionspolymerisation in Gegenwart von Schutzkolloid und Trocknung der damit erhaltenen Polymerdispersion nach Zugabe von Schutzkolloid als Verdünnungshilfe, dadurch gekennzeichnet, dass als Schutzkolloide teilverseifte Vinylacetat-Ethylen-Copolymerisate verwendet werden mit einem Ethylenanteil von 1 bis 15 Mol-%, einem Verseifungsgrad VG der Vinylacetat-Einheiten von 85 bis 90 Mol-%, und einer Höpplerviskosität, in 4 %-iger wässriger Lösung von 2 bis 30 mPas (Methode nach Höppler bei 20°C, DIN 53015).

In bevorzugten Ausführungsformen beträgt die Höppler-Viskosität 3 bis 25 mPas. Der Ethylengehalt beträgt vorzugsweise 1 bis 5 Mol-%. Der Schutzkolloidanteil in Dispersion und Pulver beträgt jeweils 3 bis 30 Gew.-%, vorzugsweise 5 bis 20 Gew.-%, jeweils bezogen auf das Basispolymerisat. Die verwendeten Schutzkolloide sind im allgemeinen wasserlöslich.

Die verwendeten Schutzkolloide können nach bekannten Verfahren der Polyvinylalkoholherstellung erzeugt werden. Vorzugsweise wird die Polymerisation in organischen Lösungsmitteln bei erhöhter Temperatur mit Peroxiden als Initiator durchgeführt. Als Lösungsmittel werden bevorzugt Alkohole wie Methanol oder Propanol eingesetzt. Der Ethylengehalt des Polymeren wird dabei über den Druck gesteuert. Das resultierende Vinylacetat-Ethylen-Copolymer wird vorzugsweise nicht isoliert, sondern direkt der Verseifung unterworfen. Die Verseifung erfolgt nach bekannten Verfahren, zum Beispiel mit methanolischer NaOH als Katalysator. Nach der Verseifung wird das Lösungsmittel durch destillative Aufarbeitung gegen Wasser ausgetauscht. Das Schutzkolloid wird vorzugsweise nicht isoliert, sondern direkt als wässrige Lösung für die Polymerisation verwendet.

Für das Basispolymerisat geeignete Vinylester sind solche von Carbonsäuren mit 1 bis 15 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 13 C-Atomen, beispielsweise VeoVa9^{R} oder VeoVa10^{R} (Handelsnamen der Firma Shell). Besonders bevorzugt ist Vinylacetat.

Geeignete Methacrylsäureester oder Acrylsäureester sind Ester von unverzweigten oder verzweigten Alkoholen mit 1 bis 15 C-Atomen wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Bevorzugt sind Methylacrylat, Methylmethacrylat, n-Butylacrylat und 2-Ethylhexylacrylat.

Beispiele für Olefine und Diene sind Ethylen, Propylen und 1,3-Butadien. Geeignete Vinylaromaten sind Styrol und Vinyltoluol. Ein geeignetes Vinylhalogenid ist Vinylchlorid.

Gegebenenfalls können noch 0.05 bis 50 Gew.-%, vorzugsweise 1 bis 10 Gew.-%, bezogen auf das Gesamtgewicht des Basispolymerisats, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Methoxy-, Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Beispiele für geeignete Homo- und Mischpolymerisate sind Vinylacetat-Homopolymerisate, Mischpolymerisate von Vinylacetat mit Ethylen, Mischpolymerisate von Vinylacetat mit Ethylen und einem oder mehreren weiteren Vinylestern, Mischpolymerisate von Vinylacetat mit Ethylen und Acrylsäureester, Mischpolymerisate von Vinylacetat mit Ethylen und Vinylchlorid, Styrol-Acrylsäureester-Copolymerisate, Styrol-1,3-Butadien-Copolymerisate.

Bevorzugt werden Vinylacetat-Homopolymerisate;
Mischpolymerisate von Vinylacetat mit 1 bis 40 Gew.-% Ethylen;
Mischpolymerisate von Vinylacetat mit 1 bis 40 Gew.-% Ethylen und 1 bis 50 Gew.-% von einem oder mehreren weiteren Comonomeren aus der Gruppe Vinylester mit 1 bis 12 C-Atomen im Carbonsäurerest wie Vinylpropionat, Vinyllaurat, Vinylester von alpha-verzweigten Carbonsäuren mit 9 bis 13 C-Atomen wie VeoVa9, VeoVa10, VeoVa11;
Mischpolymerisate von Vinylacetat, 1 bis 40 Gew.-% Ethylen und vorzugsweise 1 bis 60 Gew.-% Acrylsäureester von unverzweigten oder verzweigten Alkoholen mit 1 bis 15 C-Atomen, insbesonders n-Butylacrylat oder 2-Ethylhexylacrylat; und
Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% Acrylsäureester von unverzweigten oder verzweigten Alkoholen mit 1 bis 15 C-Atomen, insbesonders n-Butylacrylat oder 2-Ethylhexylacrylat, welche noch 1 bis 40 Gew.-% Ethylen enthalten;
Mischpolymerisate mit Vinylacetat, 1 bis 40 Gew.-% Ethylen und 1 bis 60 Gew.-% Vinylchlorid; wobei
die Polymerisate noch die genannten Hilfsmonomere in den genannten Mengen enthalten können, und sich die Angaben in Gew.-% auf jeweils 100 Gew.-% aufaddieren.

Bevorzugt werden auch Mischpolymerisate von n-Butylacrylat oder 2-Ethylhexylacrylat oder Copolymerisate von Methylmethacrylat mit n-Butylacrylat und/oder 2-Ethylhexylacrylat;
Styrol-Acrylsäureester-Copolymerisate mit einem oder mehreren Monomeren aus der Gruppe Methylacrylat, Ethylacrylat, Propylacrylat, n-Butylacrylat, 2-Ethylhexylacrylat;
Vinylacetat-Acrylsäureester-Copolymerisate mit einem oder mehreren Monomeren aus der Gruppe Methylacrylat, Ethylacrylat, Propylacrylat, n-Butylacrylat, 2-Ethylhexylacrylat und gegebenenfalls Ethylen;
Styrol-1,3-Butadien-Copolymerisate;
wobei die Polymerisate noch die genannten Hilfsmonomere in den genannten Mengen enthalten können, und sich die Angaben in Gew.-% auf jeweils 100 Gew.-% aufaddieren.

Die Monomerauswahl bzw. die Auswahl der Gewichtsanteile der Comonomere erfolgt dabei so, dass im allgemeinen eine Glasübergangstemperatur Tg von -50°C bis +50°C, vorzugsweise -30°C bis +40°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Basispolymerisate erfolgt nach dem Emulsionspolymerisationsverfahren oder nach dem Suspensionspolymerisationsverfahren, vorzugsweise nach dem Emulsionspolymerisationsverfahren, wobei die Polymerisationstemperatur im allgemeinen 40°C bis 100°C, vorzugsweise 60°C bis 80°C beträgt. Bei der Copolymerisation von gasförmigen Comonomeren wie Ethylen, 1,3-Butadien oder Vinylchlorid kann auch unter Druck, im allgemeinen zwischen 5 bar und 100 bar, gearbeitet werden.

Die Initiierung der Polymerisation erfolgt mit den für die Emulsionspolymerisation bzw. Suspensionspolymerisation gebräuchlichen wasserlöslichen bzw. monomerlöslichen Initiatoren oder Redox-Initiator-Kombinationen. Beispiele für wasserlösliche Initiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, tert.-Butylperoxopivalat, Cumolhydroperoxid, Isopropylbenzolmonohydroperoxid, Azobisisobutyronitril. Beispiele für monomerlösliche Initiatoren sind Dicetylperoxydicarbonat, Dicyclohexylperoxydicarbonat, Dibenzoylperoxid. Die genannten Initiatoren werden im allgemeinen in einer Menge von 0.01 bis 0.5 Gew.-%, bezogen auf das Gesamtgewicht der Monomere, eingesetzt.

Als Redox-Initiatoren verwendet man Kombinationen aus den genannten Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt vorzugsweise 0.01 bis 0.5 Gew.-%, bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0.01 bis 5.0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd. Vorzugsweise werden keine regelnden Substanzen verwendet.

Zusätzlich zu den teilverseiften Vinylacetat-Ethylen-Copolymerisaten können weitere Schutzkolloide, beispielsweise Polyvinylalkohole, eingesetzt werden. Vorzugsweise wird ohne weitere Schutzkolloide polymerisiert.

Die teilverseiften Vinylacetat-Ethylen-Copolymerisate werden im allgemeinen in einer Menge von insgesamt 1 bis 20 Gew.-%, bezogen auf das Gesamtgewicht der Monomere, bei der Polymerisation zugesetzt. Der Schutzkolloid-Anteil kann sowohl vollständig vorgelegt, als auch teilweise vorgelegt und teilweise zudosiert werden. Vorzugsweise werden mindestens 5 Gew.-% des Schutzkolloids vorgelegt, am meisten bevorzugt wird der Schutzkolloid-Anteil vollständig vorgelegt.

Vorzugsweise wird ohne Zusatz von Emulgatoren polymerisiert. In Ausnahmefällen kann es von Vorteil sein noch zusätzlich kleine Mengen an Emulgatoren einzusetzen, gegebenenfalls 1 bis 5 Gew.-% bezogen auf die Monomermenge. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Die Monomere können insgesamt vorgelegt werden, insgesamt zudosiert werden oder in Anteilen vorgelegt werden und der Rest nach der Initiierung der Polymerisation zudosiert werden. Vorzugsweise wird so vorgegangen, daß 50 bis 100 Gew.-%, bezogen auf das Gesamtgewicht der Monomere vorgelegt wird und der Rest zudosiert wird. Die Dosierungen können separat (räumlich und zeitlich) durchgeführt werden oder die zu dosierenden Komponenten können alle oder teilweise voremulgiert dosiert werden.

Hilfsmonomeren können abhängig von ihrer chemischen Natur ebenfalls vollständig vorgelegt oder dosiert werden. Auch teilweise Vorlage oder Dosierung ist möglich. Bei Vinylacetatpolymerisationen werden die Hilfsmonomere in Abhängkeit ihrer Copolymerisationsparameter dosiert oder vorgelegt. Acrylsäurederivate beispielsweise werden dosiert, während Vinylsulfonat vorgelegt werden kann.

Der Monomerumsatz wird mit der Initiatordosierung gesteuert. Die Initiatoren werden vorzugsweise insgesamt zudosiert.

Nach Abschluß der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die damit erhältlichen wässrigen Dispersionen haben einen Feststoffgehalt von 30 bis 75 Gew.-%, vorzugsweise von 50 bis 60 Gew.-%. Zur Herstellung der in Wasser redispergierbaren Polymerpulver werden die wässrigen Dispersionen nach Zusatz von Schutzkolloiden als Verdüsungshilfe, getrocknet, mittels Sprühtrocknung. Die Dispersionen werden sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt.

In der Regel wird die Verdüsungshilfe in einer Gesamtmenge von 3 bis 30 Gew.-%, bezogen auf die polymeren Bestandteile der Dispersion, eingesetzt. Das heißt die Gesamtmenge an Schutzkolloid vor dem Trocknungsvorgang soll mindestens 3 bis 30 Gew.-%, bezogen auf den Polymeranteil betragen; bevorzugt werden 5 bis 20 Gew.-% bezogen auf den Polymeranteil eingesetzt.

Verdüsungshilfen sind die erfindungsgemäßen wasserlöslichen ethylengruppenhaltigen Polyvinylalkohole.

Bei der Verdüsung hat sich vielfach ein Gehalt von bis zu 1.5 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Silicate mit Teilchengrößen vorzugsweise im Bereich von 10 nm bis 10 µm.

Die Viskosität der zu verdüsenden Speise wird über den Feststoffgehalt so eingestellt, daß ein Wert von < 500 mPas (Brookfield-Viskosität bei 20 Umdrehungen und 23°C), bevorzugt < 250 mPas, erhalten wird. Der Feststoffgehalt der zu verdüsenden Dispersion beträgt > 35 %, bevorzugt > 40 %.

Zur Verbesserung der anwendungstechnischen Eigenschaften können bei der Verdüsung weitere Zusätze zugegeben werden. Weitere, in bevorzugten Ausführungsformen enthaltene, Bestandteile von Dispersionspulverzusammensetzungen sind beispielsweise Pigmente, Füllstoffe, Schaumstabilisatoren, Hydrophobierungsmittel.

Die in Wasser redispergierbaren, schutzkolloidstabilisierten Polymerpulver können in den dafür typischen Anwendungsbereichen eingesetzt werden. Beispielsweise in bauchemischen Produkten in Verbindung mit hydraulisch abbindenden Bindemitteln wie Zementen (Portland-, Aluminat-, Trass-, Hütten-, Magnesia-, Phosphatzement), Gips, Wasserglas, für die Herstellung von Bauklebern, Putzen, Spachtelmassen, Fußbodenspachtelmassen, Dichtschlämmen, Fugenmörteln und Farben. Ferner als Alleinbindemittel für Beschichtungsmittel und Klebemittel oder als Beschichtungs- bzw. Bindemittel für Textilien und Papier.

Die nachfolgenden Beispiele dienen der weiteren Erläuterung der Erfindung:

### Beispiele:

Schutzkolloid 1:
   Ethylenhaltiger Polyvinylalkohol mit 8 Mol-% Ethyleneinheiten und einer Viskosität nach Höppler von 3.9 mPas und einer Verseifungszahl von 150.
Schutzkolloid 2:
   Ethylenhaltiger Polyvinylalkohol mit 8 Mol-% Ethyleneinheiten und einer Viskosität nach Höppler von 2.8 mPas und einer Verseifungszahl von 157.
Schutzkolloid 3:
   Ethylenhaltiger Polyvinylalkohol mit 8 Mol-% Ethyleneinheiten und einer Viskosität nach Höppler von 4.2 mPas und einer Verseifungszahl von 121.
Schutzkolloid 4:
   Ethylenhaltiger Polyvinylalkohol mit 8 Mol-% Ethyleneinheiten und einer Viskosität nach Höppler von 3.4 mPas und einer Verseifungszahl von 111.
Schutzkolloid 5:
   Ethylenhaltiger Polyvinylalkohol mit 8 Mol-% Ethyleneinheiten und einer Viskosität nach Höppler von 20.1 mPas und einer Verseifungszahl von 136.
Schutzkolloid 6:
   Polyvinylalkohol mit einer Viskosität nach Höppler von 4 mPas und einer Verseifungszahl von 140.
Schutzkolloid 7:
   Polyvinylalkohol mit einer Viskosität nach Höppler von 25 mPas und einer Verseifungszahl von 140.

### Beispiel 1:

### Emulsionspolymerisation mit Schutzkolloid 1

In einem Druckautoklaven wurden 1170 g Wasser, 728 g Schutzkolloid 1 (21.6 %-ige Lösung) und 1930 g Vinylacetat vorgelegt. Diese Voremulsion wurde auf einen pH-Wert von 4.0 eingestellt und auf 55°C erwärmt. Anschließend wurde der Autoklav mit einem Ethylendruck von 18 bar beaufschlagt.
Zum Starten der Polymerisation wurden t-Butylhydroperoxid (TBHP 1.5 %-ig in Wasser) und Brüggolit (2.5 %-ig in Wasser) mit je 30 g/h zudosiert. Die Temperatur wurde durch Kühlung auf 55°C gehalten. 60 min nach Beginn der Reaktion wurde mit der Dosierung von 484 g Vinylacetat in 90 Minuten und 168 g Schutzkolloid 1 + 120 g Wasser in 120 Minuten begonnen. Ethylen wurde ab Reaktionsbeginn bei 38 bar nachdosiert bis zu einer Gesamtmenge von 260 g. Anschließend wurde noch eine Stunde auspolymerisiert, das Restgas entspannt und abgekühlt. Zur Verringerung des Restmonomers wurde noch mit 10 g TBHP (10 %-ig) und 20 g Brüggolit (5 %-ig) nachpolymerisiert.
Die Dispersion hatte eine Festgehalt von 55.5 %, einen pH-Wert von 4.0 und eine Viskosität von 390 mPas.

### Beispiel 2:

### Emulsionspolymerisation mit Schutzkolloid 2

Analog Beispiel 1 wurde eine Dispersion mit Schutzkolloid 2 (Festgehalt 20.0 %) hergestellt.
Die Dispersion hatte eine Festgehalt von 54.7 %, einen pH-Wert von 4.2 und eine Viskosität von 600 mPas.

### Beispiel 3:

### Emulsionspolymerisation mit Schutzkolloid 3

Analog Beispiel 1 wurde eine Dispersion mit Schutzkolloid 3 hergestellt.
Die Dispersion hatte eine Festgehalt von 51.1 %, einen pH-Wert von 4.5 und eine Viskosität von 60 mPas.

### Beispiel 4:

### Emulsionspolymerisation mit Schutzkolloid 4

Analog Beispiel 1 wurde eine Dispersion mit Schutzkolloid 4 hergestellt.
Die Dispersion hatte eine Festgehalt von 52.0 %, einen pH-Wert von 4.2 und eine Viskosität von 350 mPas.

### Beispiel 5:

### Emulsionspolymerisation mit den Schutzkolloiden 1 und 5

Analog Beispiel 1 wurde eine Dispersion mit den Schutzkolloiden 1 und 5 hergestellt, wobei 20 Gew.-% des Schutzkolloides 1 in Beispiel 1 durch Schutzkolloid 5 ersetzt wurden.
Die Dispersion hatte eine Festgehalt von 51.5 %, einen pH-Wert von 4.3 und eine Viskosität von 450 mPas.

### Vergleichsbeispiel 6:

### Emulsionspolymerisation mit Schutzkolloid 6

Analog Beispiel 6 wurde eine Dispersion mit Schutzkolloid 6 hergestellt.
Die Dispersion hatte eine Festgehalt von 55.0 %, einen pH-Wert von 4.1 und eine Viskosität von 400 mPas.

### Vergleichsbeispiel 7:

### Emulsionspolymerisation mit den Schutzkolloiden 6 und 7

Analog Beispiel 5 wurde eine Dispersion mit den Schutzkolloiden 6 und 7 anstelle der Schutzkolloide 1 und 5 hergestellt. Die Dispersion hatte eine Festgehalt von 51.0 %, einen pH-Wert von 4.0 und eine Viskosität von 1100 mPas.

### Pulverherstellung:

Die Dispersion aus Beispiel 4 wurde nach Zusatz von 12 Gew.-% (fest/fest) des Schutzkolloides 3 in bekannter Weise zu einem Pulver versprüht (Pulver 1).
In analoger Weise wurde ein zweites Pulver mit Zugabe von 10 Gew.-% Schutzkolloid 3 und 2 Gew.-% (fest/fest) eines Polyvinylalkohols mit einem Hydrolysegrad von 88 Mol-% und einer Viskosität nach Höppler von 13 mPas hergestellt (Pulver 2).
Zum Vergleich wurde ein Pulver aus Vergleichsdispersion 6 und 12 Gew.-% Schutzkolloid 6 hergestellt (Pulver 3).

Die damit erhaltenen Pulver 1 und 2 waren gut rieselfähig, gut redispergierbar und blockstabil und zeigten bis auf die verbesserte Zementstabilität ein vergleichbares Erscheinungsbild wie das Polyvinylalkohol-stabilisierte Pulver 3.

Die Haftzugfestigkeiten in Fliesenkleber wurden in folgender Rezeptur überprüft (6 Gew.-% Polymeranteil):

| | |
|---|---|
| Quarzsand | 586 Teile |
| Portlandzement | 350 Teile |
| Cellulose | 4 Teile |
| Dispersionspulver | 60 Teile |

Die Haftzugfestigkeiten wurden nach 4 Lagerbedingungen bestimmt:

| | |
|---|---|
| 28T | 28 Tage Trockenlagerung |
| 7T/21N | 7 Tage Trockenlagerung/21 Tage Nasslagerung |
| 14T/14TS+70°C/1T | 14 Tage Trockenlagerung/ 14 Tage Wärmelagerung bei 70°C, 1 Tag Trockenlagerung |
| Frost-Tau | Frost-Tau-Lagerung |

Die Ergebnisse sind in Tabelle 2 zusammengefaßt:

**Tabelle 2:**

| | 28T (N/mm²) | 7T/21N (N/mm²) | 14T/14TS+70/1T (N/mm²) | Frost-Tau (N/mm²) |
|---|---|---|---|---|
| Pulver 1 | 1.45 | 1.20 | 1.55 | 1.22 |
| Pulver 2 | 1.35 | 1.10 | 1.40 | 1.28 |
| Pulver 3 | 1.30 | 0.95 | 1.45 | 1.12 |

Die mit teilverseiften Vinylacetat-Ethylen-Copolymerisaten stabilisierten Polymerpulver zeigen insbesondere nach Nass- und Frost-Tau-Lagerung verbesserte Haftzugswerte im Vergleich zum Standardpulver 3, welches mit Polyvinylakohol stabilisiert war.

## Patentansprüche

1. Verfahren zur Herstellung von schutzkolloidstabilisierten Polymerisaten in Form deren in Wasser redispergierbaren Pulver auf der Basis von Homo- oder Mischpolymerisaten von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide, mittels Emulsionspolymerisation oder Suspensionspolymerisation in Gegenwart von Schutzkolloid und Trocknung der damit erhaltenen Polymerdispersion nach Zusatz von Schutzkolloid als Verdüsungshilfe, **dadurch gekennzeichnet, dass** als Schutzkolloide teilverseifte Vinylacetat-Ethylen-Copolymerisate verwendet werden, mit einem Ethylenanteil von 1 bis 15 Mol-%, einem Verseifungsgrad VG der Vinylacetat-Einheiten von 85 bis 90 Mol-%, und einer Höpplerviskosität, in 4 %-iger wässriger Lösung von 2 bis 30 mPas (Methode nach Höppler bei 20°C, DIN 53015).

2. Verfahren nach Anspruch 1, **dadurch gekennzeichnet, dass** der Ethylengehalt der teilverseiften Vinylacetat-Ethylen-Copolymerisate 1 bis 5 Mol-% beträgt.

3. Verfahren nach Anspruch 1 bis 2, **dadurch gekennzeichnet, dass** der Schutzkolloidanteil 3 bis 30 Gew.-%, bezogen auf das Basispolymerisat, beträgt.

4. Verfahren nach Anspruch 1 bis 3, **dadurch gekennzeichnet, dass** die Monomerauswahl und die Auswahl der Gewichtsanteile der Comonomere für das Basispolymerisat so erfolgt, dass diese eine Glasübergangstemperatur Tg von -50°C bis +50°C aufweisen.

5. Verfahren nach Anspruch 1 bis 4, **dadurch gekennzeichnet, dass** noch 0.05 bis 50 Gew.-%, bezogen auf das Gesamtgewicht des Basispolymerisats, Hilfsmonomere copolymerisiert werden.

6. Verwendung der Verfahrensprodukte aus Anspruch 1 bis 5 als Rezepturbestandteil in Verbindung mit anorganischen, hydraulisch abbindenden Bindemitteln in Bauklebern, Putzen, Spachtelmassen, Fußbodenspachtelmassen, Fugenmörtel und Farben.

7. Verwendung der Verfahrensprodukte aus Anspruch 1 bis 5 als Alleinbindemittel für Beschichtungsmittel und Klebemittel.

8. Verwendung der der Verfahrensprodukte aus Anspruch 1 bis 5 als Beschichtungs- und Bindemittel für Textilien und Papier.

## Claims

1. Method for the production of protective-colloid-stabilized polymers in the form of their water-redispersible powders, based on homo- or copolymers of one or more monomers from the group consisting of vinyl esters of unbranched or branched alkyl carboxylic acids having from 1 to 15 carbon atoms, methacrylic esters and acrylic esters of alcohols having from 1 to 15 carbon atoms, vinylaromatics, olefins, dienes, and vinyl halides, by means of emulsion polymerisation or suspension polymerisation in the presence of protective colloid and drying of the resultant polymer dispersion after addition of protective colloid as spraying aid, **characterized in that** partially hydrolysed vinyl acetate-ethylene copolymers are used as protective colloids, with an ethylene content of from 1 to 15 mol%, with a degree of hydrolysation DH of the vinyl acetate units of 85 to 90 mol%, and with a Höppler viscosity, in 4% strength aqueous solution, of from 2 to 30 mPas (Höppler method at 20°C, DIN 53015).

2. Method according to Claim 1, **characterized in that** the ethylene content of the partially hydrolysed vinyl acetate-ethylene copolymers is from 1 to 5 mol%.

3. Method according to any of Claims 1 to 2, **characterized in that** the protective colloid content is from 3 to 30% by weight, based on the base polymer.

4. Method according to any of Claims 1 to 3, **characterized in that** the selection of monomer and the selection of the parts by weight of the comonomers for the base polymer is such that these have a glass transition temperature Tg of from - 50°C to +50°C.

5. Method according to any of Claims 1 to 4, **characterized in that** from 0.05 to 50% by weight, based on the total weight of the base polymer, of auxiliary monomers are also copolymerized.

6. Use of the products from the method of any of Claims 1 to 5 as a constituent of a formulation in association with inorganic, hydraulically setting binders in construction adhesives, plasters or renderings, trowelling compositions, floor-filling compositions, jointing mortars, or paints.

7. Use of the products from the method of any of Claims 1 to 5 as sole binders for coating compositions or adhesives.

8. Use of the products from the method of any of Claims 1 to 5 as a composition for the coating or binding of textiles or paper.

## Revendications

1. Procédé de préparation de polymères stabilisés par des colloïdes de protection sous la forme de leurs poudres redispersibles dans l'eau, à base d'homopolymères ou de copolymères d'un ou de plusieurs monomères parmi le groupe comprenant des esters vinyliques d'acides alkylcarboxyliques non ramifiés ou ramifiés renfermant de 1 à 15 atomes de carbone, des esters de l'acide méthacrylique et des esters de l'acide acrylique d'alcools renfermant de 1 à 15 atomes de carbone, des composés vinyl-aromatiques, des oléfines, des diènes et des halogénures de vinyle, par polymérisation en émulsion ou polymérisation en suspension en présence de colloïde de protection et séchage de la dispersion de polymère ainsi obtenue après l'addition de colloïde de protection en tant qu'auxiliaire de pulvérisation, **caractérisé en ce que** l'on utilise, en tant que colloïdes de protection, des copolymères d'acétate de vinyle/ éthylène partiellement saponifiés, avec une proportion d'éthylène de 1 à 15 % en moles, un degré de saponification DS des motifs acétate de vinyle de 85 à 90 % en moles et une viscosité Höppler, dans une solution aqueuse à 4 %, de 2 à 30 mPas (méthode selon Höppler à 20 °C, DIN 53015).

2. Procédé selon la revendication 1, **caractérisé en ce que** la teneur en éthylène des copolymères d'acétate de vinyle/éthylène partiellement saponifiés est de 1 à 5 % en moles.

3. Procédé selon l'une quelconque des revendications 1 à 2, **caractérisé en ce que** la proportion de colloïde de protection est de 3 à 30 % en poids par rapport au polymère de base.

4. Procédé selon l'une quelconque des revendications 1 à 3, **caractérisé en ce que** le choix des monomères et le choix des proportions en poids des comonomères pour le polymère de base sont réalisés de telle manière que celui-ci présente une température de transition vitreuse Tg de -50 °C à +50 °C.

5. Procédé selon l'une quelconque des revendications 1 à 4, **caractérisé en ce que** l'on copolymérise encore de 0,05 à 50 % en poids, par rapport au poids total du polymère de base, de monomères adjuvants.

6. Utilisation des produits du procédé de l'une quelconque des revendications 1 à 5, comme constituant de formulation en association avec des liants hydrauliques inorganiques dans des colles de construction, des enduits, des mastics, des bouche-pores pour sols, des mortiers à joints et des teintures.

7. Utilisation des produits du procédé de l'une quelconque des revendications 1 à 5, comme liant unique pour des agents de revêtement et des colles.

8. Utilisation des produits du procédé de l'une quelconque des revendications 1 à 5, comme agent de revêtement et liant pour les textiles et le papier.
